# EUROPÄISCHE PATENTANMELDUNG

(11) **EP 0 951 121 A1**
(43) Veröffentlichungstag der Anmeldung: **20.10.1999**
(21) Anmeldenummer: 99104325.8
(22) Anmeldetag: 06.03.1999
(51) Int. Cl.: H02B 1/48

(54) **Gehäuse zur Aufnahme von elektrischen oder elektronischen Bauteilen**

(30) Priorität: 17.04.1998 DE 29806878 U
(71) Anmelder: H.-J. Bernstein GmbH, 32479 Hille (DE)
(72) Erfinder: Weiss, Jürgen, 32312 Lübbecke (DE)
(74) Vertreter: Stracke, Alexander, Dipl.-Ing.

(57) **Zusammenfassung**

Gehäuse zur Aufnahme elektrischer oder elektronischer Bauteile.
Gegenstand der Erfindung ist ein aus Blech gefertigtes, rechteckiges Gehäuse (1) zur Aufnahme von elektrischen oder elektronischen Bauteilen. Das Gehäuse (1) umfaßt eine umlaufende, vier Seitenwände bildenden Rahmen (2), eine Frontplatte (3) und eine Tür (4).
Der die Seitenwände bildende Rahmen (2) ist im Gehäuseinneren parallel zur Frontplatte (3) und der Tür (4) verlaufenden Nuten (5) versehen. Diese Nuten sind zur Aufnahme von Montageschienen (8) zur Befestigung von elektrischen oder elektronischen Bauteilen vorgesehen. Durch weitere Abwinklungen im Bereich der Nuten (5) sind Stützstege (7) gebildet, auf denen ein erster Schenkel (10) eines Stützwinkels (11) aufliegt. Der andere Schenkel (14) des jeweiligen Stützwinkels (11) liegt unmittelbar auf einer Montageschiene (8) auf. Der Schenkel (10) des Stützwinkels (11) wird von einer Befestigungsschraube (9) durchtreten, die in eine im inneren der Montageschiene (8) liegende Mutter (13) eingeschraubt ist.
Hierdurch wird eine einfache und leichte Festlegung der Montageschienen (8) an jeder beliebigen Stelle im Gehäuseinneren ermöglicht.

## Beschreibung

Die vorliegende Erfindung betrifft ein aus Blech gefertigtes, rechteckiges Gehäuse zur Aufnahme von elektrischen oder elektronischen Bauteilen, umfassend einen umlaufenden, die vier Seitenwände bildenden Rahmen, eine Frontplatte und eine Tür.

Der vorliegenden Erfindung liegt die Aufgabe zugrunde, ein Gehäuse der gattungsgemäßen Art auf einfache Art und Weise und mit einfachsten Mitteln so zu gestalten, daß optimale Voraussetzungen zur Festlegung elektrischer oder elektronischer Bauteile im Gehäuseinneren geschaffen sind.

Diese Aufgabe wird erfindungsgemäß dadurch gelöst, daß der die Seitenwände bildende Rahmen im Gehäuseinneren mit parallel zu der Frontplatte und der Tür verlaufenden Nuten versehen ist, daß in diese Nuten die stirnseitigen Enden von quer zur jeweiligen Seitenwand verlaufenden Montageschienen zur Befestigung von elektrischen oder elektronischen Bauteilen hineinragen, daß die Montageschienen durch Befestigungsschrauben an den dem Gehäuseinneren zugewandten Schenkel der Nuten festgeklemmt sind, daß sich an die besagten Schenkel jeweils ein Lotrecht ins Gehäuseinnere erstreckender Stützsteg anschließt und daß die Befestigungsschrauben jeweils einen ersten, auf den Stützsteg aufliegenden Schenkel eines etwa L-förmigen Stützwinkels durchtreten, mit ihrem Kopf auf diesem Schenkel aufliegen und mit ihrem Gewindeschaft in innerhalb der Montageschienen liegende Muttern eingeschraubt sind, wobei der andere Schenkel des Stützwinkels mit seiner Stirnkante unmittelbar an der Montageschiene abgestützt ist.

Durch die Montageschienen können elektrische oder elektronische Bauteile innerhalb des Gehäuses an beliebigen Stellen montiert werden, da die Montageschienen selbst ebenfalls innerhalb der Nuten verschoben und an jeweils dafür vorgesehenen Positionen festgelegt werden können. Die hierfür benötigten Bauteile bestehen aus den Montageschienen selbst, aus den Befestigungsschrauben nebst Muttern sowie den Stützwinkeln, die gehäuseseitige Voraussetzung für deren Festlegung wird durch die Nuten einerseits und die Stützstege andererseits geschaffen. Soweit die benötigten Bauteile betroffen sind, handelt es sich hierbei um einfach herstellbare Bauteile oder um handelsübliche Normteile.

Somit wird mit einem Minimum an konstruktivem Aufwand eine äußerst flexible Befestigungsmöglichkeit für elektrische oder elektronische Bauteile im Inneren des Gehäuse geschaffen.

Weitere Merkmale der Erfindung sind Gegenstand von Unteransprüchen.

In den beigefügten Zeichnungen sind Ausführungsbeispiele der Erfindung dargestellt, die im folgenden näher beschrieben werden.

Es zeigen:
- Figur 1: Eine perspektivische Darstellung eines erfindungsgemäßen Gehäuses mit teilweise aufgebrochen gezeigter Frontplatte,
- Figur 2: einen Schnitt nach der Linie II-II in Figur 1,
- Figur 3: einen der Figur 2 entsprechenden Schnitt nach einem weiteren Ausführungsbeispiel der Erfindung.

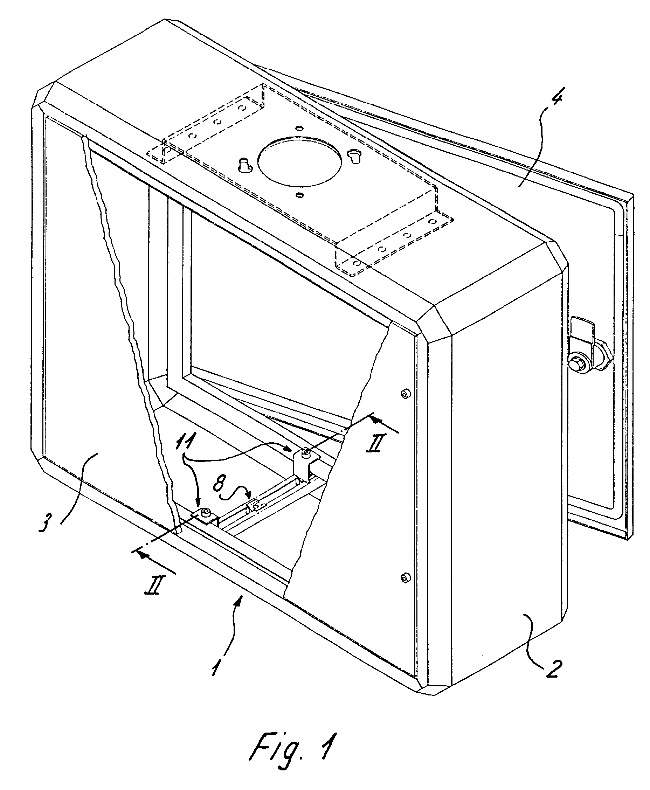

Das in Figur 1 dargestellte und insgesamt mit dem Bezugszeichen 1 bezeichnete Gehäuse zur Aufnahme von elektrischen oder elektronischen Bauteilen ist aus Blech gefertigt und weist eine rechteckige Grundform auf.

Das Gehäuse 1 umfaßt einen umlaufenden und die vier Seitenwände bildenden Rahmen 2 sowie eine Frontplatte 3 und eine anscharnierte Tür 4.

Die Frontplatte 3 ist in Figur 1 aufgebrochen dargestellt, um einen Einblick in das Innere des Gehäuses 1 zu ermöglichen.

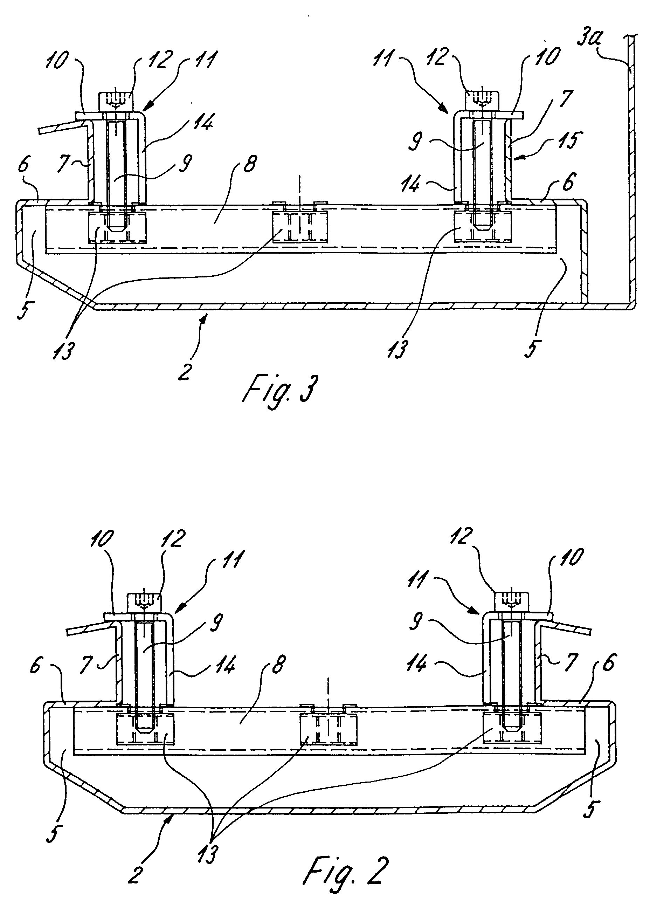

Wie sich aus Figur 1 und insbesondere aus Figur 2 ergibt, ist der die Seitenwände bildende Rahmen 2 im Gehäuseinneren mit parallel zu der Frontplatte 3 und der Tür 4 verlaufenden Nuten 5 ausgestattet, die beim Ausführungsbeispiel nach den Figuren 1 und 2 durch mehrfache Abkantung im Bereich der Längskanten der Seitenwandungen gebildet sind.

Diese Nuten 5 sind zum Gehäuseinneren hin gesehen durch Schenkel 6 begrenzt, an die sich jeweils ein Stützsteg 7 anschließt. Die Stützstege 7 verlaufen lotrecht zu den Schenkeln 6, und zwar in Richtung des Gehäuseinneren.

In die Nuten 5 greifen die stirnseitigen Enden von Montageschienen 8 ein, wobei in Figur 1 lediglich eine Montageschiene 8 erkennbar ist. Diese Montageschienen 8 dienen zur Befestigung von elektrischen oder elektronischen Bauteilen im Inneren des Gehäuses 1 und in der Praxis wird es immer so aussehen, daß eine Vielzahl von Montageschienen 8 im Inneren des Gehäuses angeordnet sein werden.

Die Festlegung der Montageschienen 8 erfolgt durch Befestigungsschrauben 9, über welche die Montageschienen 8 an den Schenkeln 6 festgeklemmt werden können.

Wie Figur 2 deutlich macht, durchtreten die Befestigungsschrauben 9 einen ersten und jeweils auf einem Stützsteg 7 aufliegenden Schenkel 10 eines etwa L-förmigen Stützwinkels 11, wobei der Kopf 12 der Befestigungsschrauben 9 auf dem besagten Schenkel 10 aufliegt, während der Gewindeschalt der Befestigungsschrauben 9 jeweils in eine innerhalb der Montageschiene 8 liegende Mutter 13 eingeschraubt ist. Der andere Schenkel 14 des L-förmigen Stützwinkels 11 ist mit seiner freien Stirnkante unmittelbar an der Montageschiene 8 abgestützt.

Die Montageschienen 8 selbst sind als etwa C-förmige Profile ausgebildet und bieten in an sich bekannter Weise die Möglichkeit, die Muttern 13 innerhalb der Montageschienen 8 an beliebige Stellen zu verschieben.

Wie Figur 2 deutlich macht, sind zusätzliche Muttern 13 innerhalb der Montageschienen 8 untergebracht, und zwar zum schon mehrfach angesprochenen Zweck der Befestigung von elektrischen oder elektronischen Bauteilen.

Beim Ausführungsbeispiel der Erfindung nach Figur 3 ist eine der Nuten 5 wie beim Ausführungsbeispiel gemäß Figur 2 durch mehrfaches Abkanten der entsprechenden Längskante des Rahmens 2 gebildet.

Die andere Nut 5, die beispielsweise parallel zu einer mit dem Rahmen 2 im übrigen einstückig gebildeten Frontplatte 3a verläuft, ist durch einen Stufenwinkel 15, der an einer Seitenwand befestigt ist, alternativ hierzu aber auch an der Frontplatte 3a befestigt sein könnte. Auch dieser Stufenwinkel 15 weist einen Schenkel 6 zum Festklemmen einer Montageschiene 8 auf und einen Stützsteg 7, auf dem ein erster Schenkel 10 eines etwa L-förmigen Stützwinkels 11 aufliegt.

Insoweit ist die Befestigung der Montageschiene 8 in der gleichen Weise realisiert, wie beim Ausführungsbeispiel gemäß Figur 2.

Auch hier können beliebig viele Montageschienen 8 innerhalb der Nuten 5 festgelegt sein, so daß entsprechend den Bedürfnissen des jeweiligen Anwenders die erforderlichen elektrischen oder elektronischen Bauteile problemlos im Inneren des Gehäuses 1 montiert und befestigt werden können.

## Patentansprüche

1. Aus Blech gefertigtes, rechteckiges Gehäuse zur Aufnahme von elektrischen oder elektronischen Bauteilen, umfassend einen umlaufenden, die vier Seitenwände bildenden Rahmen, eine Frontplatte und eine Tür, **dadurch gekennzeichnet, daß** der die Seitenwände bildende Rahmen (2) im Gehäuseinneren mit parallel zu der Frontplatte (3, 3a) und der Tür (4) verlaufenden Nuten (5) versehen ist, daß in diese Nuten (5) die stirnseitigen Enden von quer zur jeweiligen Seitenwand verlaufenden Montageschienen (8) zur Befestigung von elektrischen oder elektronischen Bauteilen hineinragen, daß die Montageschienen (8) durch Befestigungsschrauben (9) an den dem Gehäuseinneren zugewandten Schenkel (6) der Nuten (5) festgeklemmt sind, daß sich an die besagten Schenkel (6) jeweils ein Lotrecht ins Gehäuseinnere erstreckender Stützsteg 7 anschließt, und daß die Befestigungsschrauben (9) jeweils einen ersten, auf dem Stützsteg 7 aufliegenden Schenkel eines etwa L-Förmigen Stützwinkels (11) durchtreten, mit ihrem Kopf (12) auf diesen Schenkel (10) aufliegen und mit ihrem Gewindeschaft in innerhalb der Montageschienen (8) liegende Muttern (13) eingeschraubt sind, wobei der andere Schenkel (14) des Stützwinkels (11) mit seiner Stirnkante unmittelbar an der Montageschiene (8) abgestützt ist.

2. Gehäuse nach Anspruch 1, **dadurch gekennzeichnet, daß** die Nuten (5) durch mehrfache Abkantung der Längskanten der Seitenwände gebildet sind.

3. Gehäuse nach Anspruch 1, **dadurch gekennzeichnet, daß** die Nuten (5) durch mehrfach abgekantete Stufenwinkel (15) begrenzt wobei die Stufenwinkel (15) an den Seitenwänden oder an einer Frontplatte (3a) des Gehäuses befestigt sind.

4. Gehäuse nach einem oder mehreren der vorhergehenden Ansprüche, **dadurch gekennzeichnet, daß** die Montageschienen (8) als im Querschnitt etwa C-förmige Profilschienen ausgebildet sind.
